# EUROPÄISCHE PATENTANMELDUNG

(11) **EP 1 537 974 A2**
(43) Veröffentlichungstag der Anmeldung: **08.06.2005**
(21) Anmeldenummer: 04027204.9
(22) Anmeldetag: 16.11.2004
(51) Int. Cl.: B29C 47/90

(54) **Kalibrierkorb bei Blasfolienanlagen**

(30) Priorität: 28.11.2003 DE 10355746
(71) Anmelder: Kiefel Extrusion Gmbh, 67547 Worms (DE)
(72) Erfinder: Hessenbruch, Rolf, 42855 Remscheid (DE)
(74) Vertreter: Zmyj, Erwin, Dipl.-Ing., Dipl.-Wirtsch.-Ing.

(57) **Zusammenfassung**

Kalibrierkorb für Blasfolienanlagen, dessen Leitelemente aus zylindrischen Bürstenrollen (10) bestehen, die nur eine sehr geringe Kontaktfläche mit der Folie (3) aufweisen und deren Borsten so angeordnet sind, dass sie die von unten kommende Kühlluft nahezu ungehindert passieren lassen und dadurch eine sehr gleichmäßige Auskühlung des Schlauches stattfindet. Dies trägt erheblich zur Qualitätssteigerung der Folie bei.

## Beschreibung

Die Erfindung betrifft eine Folien-Blasanlage mit einem Kalibrierkorb zur Durchmesserbestimmung des Folienschlauches. Der Kalibrierkorb wird normalerweise bei Blasfolienanlagen mit Innenluftkühlung eingesetzt, er begrenzt die Ausdehnung des Folienschlauches, indem er gebogene Führungsstangen besitzt, auf denen kleine Röllchen aus Teflon oder anderen geeigneten Materialien laufen. Diese Röllchen sind mit der Folie in Kontakt. Da eine Blasfolienanlage einen relativ großen Durchmesserbereich abdecken muss, sind die Führungsstangen so gebogen, dass sie sowohl bei einem kleinen als auch bei einem großen Durchmesser eingesetzt werden können. Da die Kurve der Führungsrollen nur maximal bei einem Durchmesser den Folienschlauch optimal, das heißt gleichmäßig berührt, sind für alle anderen Durchmesserbereiche keine günstigen Kühlbedingungen anzutreffen, da die Führungsrollen an den Berührungsstellen den Kühlluftstrom unterbrechen, während er an den Nichtberührungsstellen weiter kühlen kann. Dies führt somit zu unterschiedlicher Auskühlung und zu Qualitätseinbußen.

Zweck der vorliegenden Erfindung ist es, diesen Nachteil zu verhindern. Aus diesem Grunde werden als Führungsrollen zylindrische Rundbürsten eingesetzt, deren Borstenbüschel so angeordnet sind, dass sie die von unten kommende Kühlluft nahezu ungehindert durchlassen und somit der Kühleffekt aufrecht erhalten bleibt. Ein weiterer Vorteil besteht darin, dass die Berührungsfläche Folie/Bürstenrolle extrem klein ist, da die Folie nur die Spitze der Borsten berührt. Dadurch wird die bei den Teflonröllchen übliche zusätzliche Erwärmung vermieden, im Gegenteil, die Kühlung wird deutlich gleichmäßiger.

Anhand der in den beigefügten Zeichnungen dargestellten Ausführungsbeispielen wird die Erfindung näher erläutert. Es zeigen
- **Figur 1:**: die gebogenen Führungsstangen mit den Röllchen bei großem Schlauchdurchmesser;
- **Figur 2:**: die gebogenen Führungsstangen mit den Röllchen bei kleinem Schlauchdurchmesser;
- **Figur 3:**: ein Beispiel für eine eingesetzte Bürstenrolle;
- **Figur 4:**: die Anordnung der Bürstenrollen am Folienschlauch;
- **Figur 5:**: die Draufsicht auf einen erfindungsgemäßen Kalibrierkorb mit 12 Führungselementen bei einem großen Foliendurchmesser;
- **Figur 6:**: die Draufsicht bei einem kleinen Foliendurchmesser;
- **Figur 7:**: die Abwicklung einer Seitenansicht des erfindungsgemäßen Kalibrierkorbes mit 6 Führungsreihen;
- **Fig. 8:**: eine Bürstenrollenhalterung; und
- **Fig. 9:**: eine gegenüber Figur 8 abgewandelte Bürstenrollenhalterung

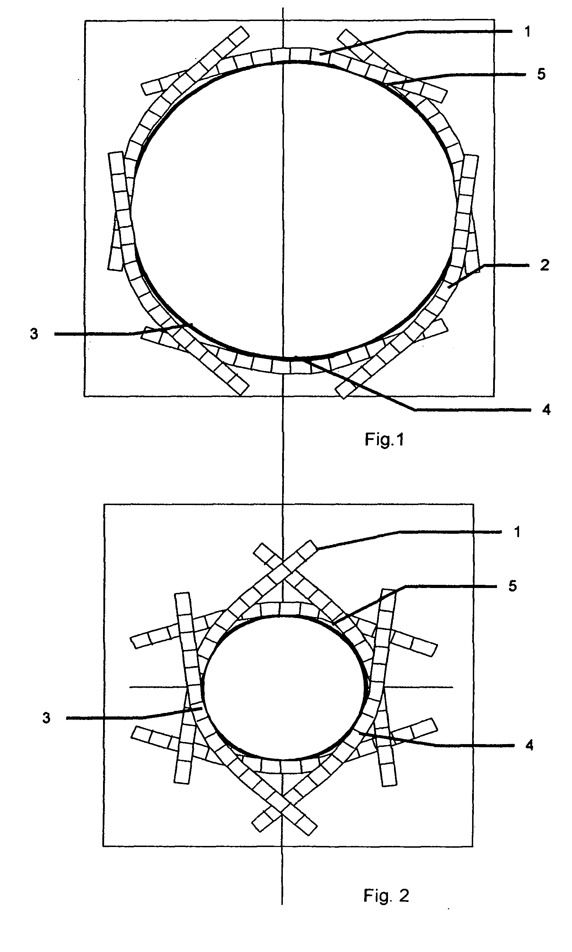

Figur 1 zeigt schematisch die Draufsicht auf einen üblichen Kalibrierkorb mit den gebogenen Führungselementen 1 und den Röllchen 2. Diese berühren den Folienschlauch 3 an den Kontaktstellen 4. Es zeigt sich, dass zwischen den Führungselementen Stellen 5 sind, an denen der Folienschlauch nicht berührt wird.

Figur 2 zeigt eine ähnliche Situation, diesmal aber bei kleinem Foliendurchmesser. Es ist unschwer zu erkennen, dass die berührungsfreien Stellen 5 größer geworden sind und somit für die gleichmäßige Auskühlung ungünstiger.

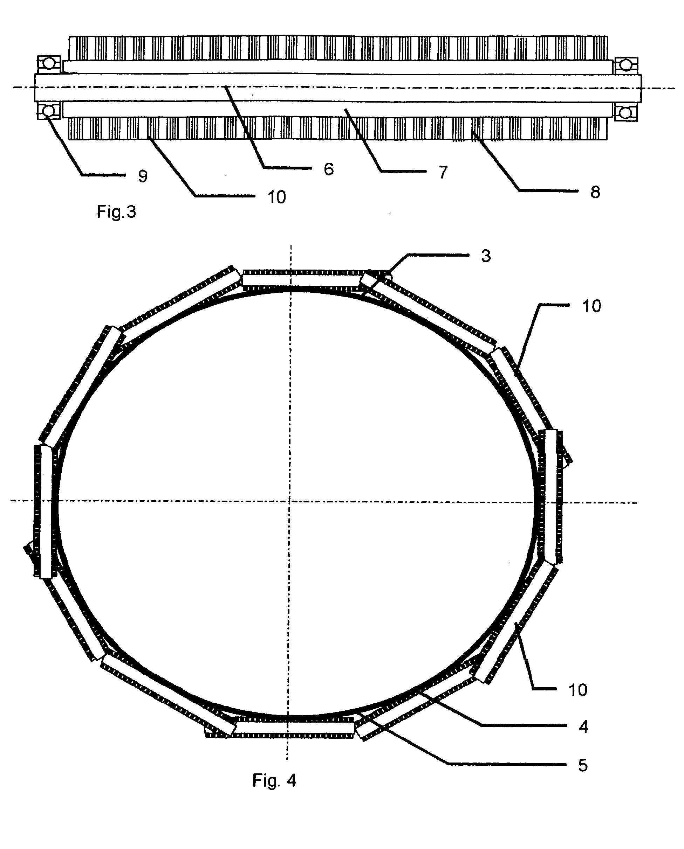

Figur 3 zeigt ein Beispiel für die erfindungsgemäß eingesetzte Bürstenrolle 10 mit der Tragwelle 6, die in den Kugellagern 9 läuft, sowie das Trägermaterial 7, in das die Borstenbüschel 8 eingearbeitet sind. Diese Borstenbüschel 8 sind so ausgelegt, dass sie einem Luftstrom nur einen geringen Widerstand entgegen bringen. Zusätzlich drehen sie sich am Folienschlauch in der gleichen Richtung, in der auch die Kühlluft strömt.

Figur 4 zeigt schematisch die Bürstenrollen 10 in ihrer Anordnung um den Folienschlauch 3. Auch hier sind zwischen den einzelnen Bürstenrollen die berührungsfreien Stellen 5 zu erkennen, sie wirken sich aber nicht negativ aus, da der Kühlluftstrom an den berührungsfreien Zonen nahezu genauso durchströmt wie an den Berührungsstellen 4. Da auch an den Berührungsstellen 4 der Kontakt mit den Spitzen der Borsten sehr gering ist, kann eine gleichmäßige Kühlung erzielt werden.

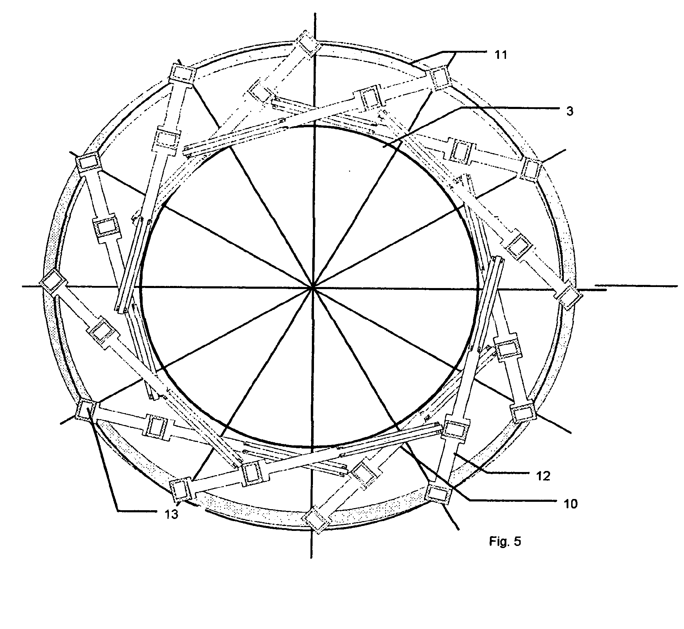

Figur 5 zeigt die Draufsicht auf einen erfindungsgemäßen Kalibrierkorb mit der Anordnung der Führungsarme 12 bei großem Schlauchdurchmesser. Die Führungsarme 12 sind mit dem Traggestell 11 über Drehpunkte 13 drehbar verbunden. Die Anpassung an den Folienschlauch 3 erfolgt durch synchrones Drehen aller Führungsarme 12 mit den Bürstenrollen 10, bis diese den Schlauch berühren.

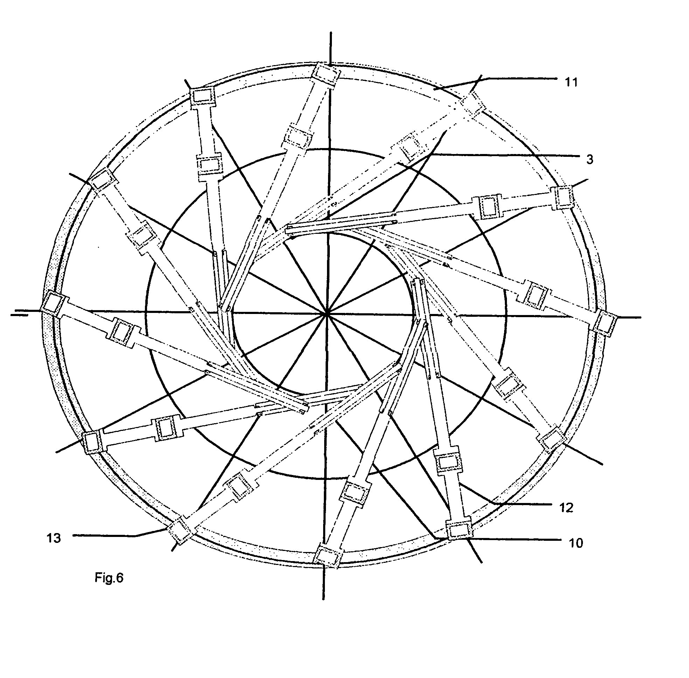

Figur 6 zeigt die Situation von Fig.5, aber mit kleinem Schlauchdurchmesser.

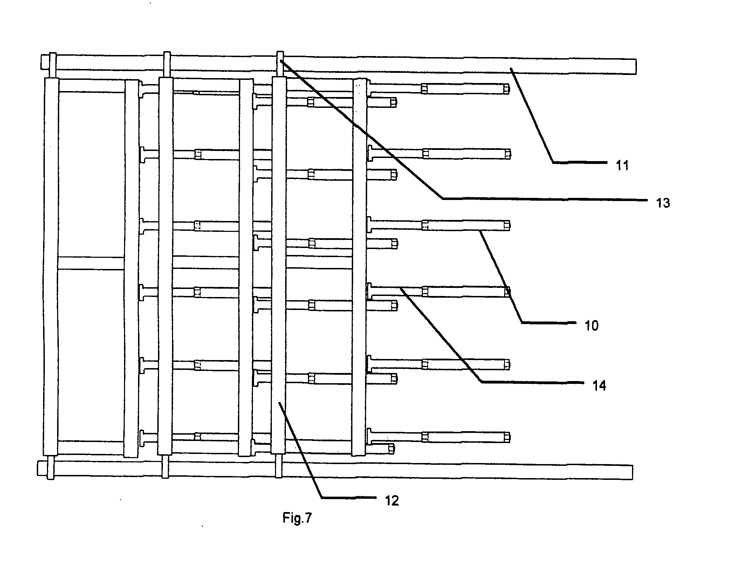

Figur 7 zeigt die Seitenansicht als Abwicklung im Ausschnitt. Das Traggestell 11 hält über die Drehpunkte 13 die Führungsarme 12, an denen die Halterung 14 mit den Bürsten 10 montiert sind. In diesem Fall besteht der Kalibrierkorb aus 6 Reihen Bürstenrollen 10, die am Umfang mit 6 bis 16 Führungsarmen 12 ausgestattet sein können. Die Anzahl der Reihen hängt von unterschiedlichen Faktoren ab, sie kann zwischen 3 und 9 liegen.

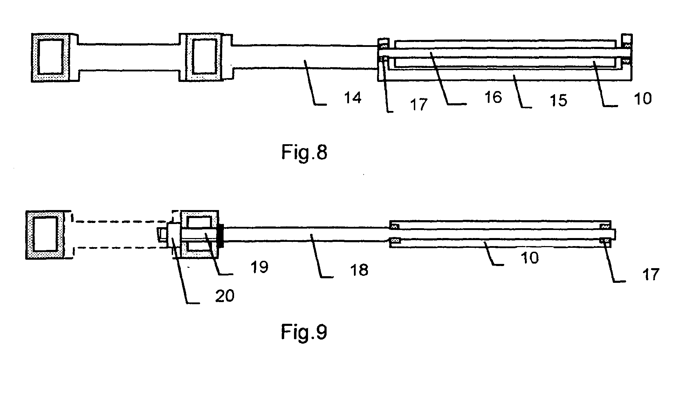

Figur 8 zeigt die Ausführung einer Bürstenrollenhalterung mit Halterung 14 und den Bürstenrollen 10, die von einer Gabel 15 gehalten werden. Die Bürstenrolle ist auf einer Welle 16 montiert. Die Welle 16 ist über die Lager 17 leicht drehbar.

Figur 9 zeigt eine andere Ausführung einer Bürstenrollenhalterung. In die Bürstenrolle 10 sind die Lager 17 integriert, die auf der Stange 18 montiert sind. Die Stange 18 besitzt an ihrem Ende ein Gewinde 19, auf dem die Mutter 20 sitzt und die Verbindung zum Rahmen 12 herstellt.

## Patentansprüche

1. Vorrichtung als Kalibrierkorb zum Stützen und Begrenzen eines Blasfolienschlauches (3) während der Extrusion, **dadurch gekennzeichnet, dass** die Berührungselemente, die den Blasfolienschlauch (3) stützen, aus zylindrischen Bürstenrollen (10) bestehen.

2. Vorrichtung nach Anspruch 1, **dadurch gekennzeichnet, dass** die Bürstenrollen (10) kugelgelagert sind und in einem Rahmen (12) gehalten werden, der um Drehpunkt (13) drehbar ist.

3. Vorrichtung nach Anspruch 1 oder 2, **dadurch gekennzeichnet, dass** jeweils benachbarte Bürstenrollen (10) um etwas mehr als der Durchmesser der Bürstenrollen höhenversetzt sind.

4. Vorrichtung nach einem der Ansprüche 1 bis 3, **dadurch gekennzeichnet, dass** die Bürstenrollen (10) so mit Borsten bestückt sind, dass durch ihre Abstände genügend Kühlluft durchfließen können.

5. Vorrichtung nach einem der Ansprüche 1 bis 4, **dadurch gekennzeichnet, dass** die Bürstenrolle auf einer kugelgelagerten Welle montiert ist.

6. Vorrichtung nach einem der Ansprüche 1 bis 5, **dadurch gekennzeichnet, dass** der Tragkörper (7) der Bürstenrolle (10) mit Kugel- oder Nadellagern versehen ist.
